# EUROPEAN PATENT APPLICATION

(11) **EP 2 827 229 A1**
(43) Date of publication of application: **21.01.2015**
(21) Application number: 13812978.8
(22) Date of filing: 15.05.2013
(51) Int. Cl.: G06F 3/041, G06F 3/0488

(54) **INFORMATION PROCESSING DEVICE**

(30) Priority: 06.07.2012 JP 2012152401
(71) Applicant: NEC CASIO Mobile Communications, Ltd., Kawasaki-shi Kanagawa 211-8666 (JP)
(72) Inventor: TAKENAKA, Hidetoshi, Kodama-gun Saitama 367-0297 (JP)
(74) Representative: Vossius & Partner
(86) International application number: PCT/JP2013/003086
(87) International publication number: WO 2014/006806

(57) **Abstract**

An information processing device according to the present invention includes: a display input part accepting an operation of an operation object; an operation detecting means for accepting an input operation of the operation object by detecting an operation position of the operation object on a face of the display input part; and a controlling means for executing a preset process in accordance with the input operation. Based on the accepted input operation, the operation detecting means detects either a first operation state or a second operation state in the same operation position on the face of the display input part. The controlling means gives an instruction for designation of specified information selected by the input operation, when the operation detecting means detects the first operation state, and gives an instruction for confirmation of the specified information, when the operation detecting means detects the second operation state.

## Description

### TECHNICAL FIELD

The present invention relates to an information processing device. More specifically, the present invention relates to an information processing device which accepts input based on an input operation with an operation object on a display face.

### BACKGROUND ART

In recent years, a touchscreen input device which can realize an intuitive operation by a user is employed in an information processing device such as a mobile phone and a tablet PC (Personal Computer), and such a touchscreen input device is widely used. A touchscreen input device is formed on a display face of a display device, and accepts an input operation by detecting the position of an operation object on the display face. For example, a touchscreen input device accepts a user's input operation such as a tap and a flick. A tap is tapping the screen with a finger, and a flick is swiping a finger quickly on the screen.

There are techniques for inputting characters and letters by using a touchscreen input device. As one technique, for example, when the character "a" (one of the characters of Hiragana that is one of the Japanese writing systems) displayed on the screen is tapped three times, the touchscreen input device accepts input of the character "u" that is the third character in the "a" column. As another technique, for example, when the character "a" displayed on the screen is touched by the user, the touchscreen input device displays the characters "i," "u," "e" and "o" on the upper, lower, right and left sides of the character "a," and accepts input of a selected character based on a tap or a flick by the user.

Besides, as a technique other than the techniques for inputting characters and letters, when the user touches a screen with a touchscreen input device, a controller for controlling a moving image is displayed, an input operation by the user is accepted, and a controller's function (e.g., "fast-forward" and "fast-backward") corresponding to the input operation is executed (see Patent Document 1, for example).

Patent Document 1: Japanese Unexamined Patent Application Publication No. 1996-069275

However, according to the abovementioned techniques, when the user touches the screen once, the touch is accepted as an input operation. Therefore, when the user touches the screen accidentally, input based on an accidental input operation is accepted, and the accidental input operation cannot be canceled.

For example, in a case where the character "a" and the character "ka" are displayed side by side and the user touches the character "a" by an incorrect operation in spite of attempting to input the character "ka," the characters "i," "u," "e" and "o" are displayed on the upper, lower, right and left sides of the character "a." In this case, in order that the user touches the character "ka," the user needs to leave his/her finger or the like from the screen once, input any of the characters "a," "i," "u," "e" and "o," and thereafter touch the character "ka." Therefore, there is a problem that operability is impaired.

### SUMMARY

Accordingly, an object of the present invention is to provide an information processing device which can solve the abovementioned problem that operability is impaired.

In order to achieve the object, an information processing device as an aspect of the present invention includes:
a display input part accepting an operation of an operation object;
an operation detecting means for accepting an input operation of the operation object by detecting an operation position of the operation object on a face of the display input part; and
a controlling means for executing a preset process in accordance with the input operation.
The operation detecting means is configured to, based on the accepted input operation, detect either a first operation state or a second operation state in a same operation position on the face of the display input part; and
the controlling means is configured to, when the operation detecting means detects the first operation state, give an instruction for designation of specified information selected by the input operation, and, when the operation detecting means detects the second operation state, give an instruction for confirmation of the specified information.

Further, an information processing method as another aspect of the present invention is a method by an information processing device including a display input part accepting an operation of an operation object, and the information processing method includes:
accepting an input operation of the operation object by detecting an operation position of the operation object on a face of the display input part, and, based on the accepted input operation, detecting either a first operation state or a second operation state in a same operation position on the face of the display input part; and
when the first operation state is detected, giving an instruction for designation of specified information selected by the input operation, and, when the second operation state is detected, giving an instruction for confirmation of the specified information.

Further, a program as another aspect of the present invention is a computer program including instructions for causing an information processing device including a display input part accepting an operation of an operation object, to realize:
an operation detecting means for accepting an input operation of the operation object by detecting an operation position of the operation object on a face of the display input part; and
a controlling means for executing a preset process in accordance with the input operation.

The computer program includes instructions for causing the information processing device to realize that:
the operation detecting means is configured to, based on the accepted input operation, detect either a first operation state or a second operation state in a same operation position on the face of the display input part; and
the controlling means is configured to, when the operation detecting means detects the first operation state, give an instruction for designation of specified information selected by the input operation, and, when the operation detecting means detects the second operation state, give an instruction for confirmation of the specified information.

With the configurations as described above, the present invention has an advantageous effect that it is possible to increase operability.

### BRIEF DESCRIPTION OF DRAWINGS

Fig. 1 is a block diagram showing a configuration of an information processing device according to a first exemplary embodiment of the present invention;
Fig. 2 is a block diagram showing a functional configuration of a configuration of an operation detecting part according to the first exemplary embodiment of the present invention;
Fig. 3 is a diagram for describing a configuration of a display part according to the present invention;
Fig. 4 is a diagram for describing an example of an input operation according to the present invention;
Fig. 5 is a diagram for describing the example of the input operation according to the present invention;
Fig. 6 is a diagram showing a display example of the display part according to the present invention;
Fig. 7 is a diagram showing the display example of the display part according to the present invention;
Fig. 8 is a diagram showing the display example of the display part according to the present invention;
Fig. 9 is a diagram showing the display example of the display part according to the present invention;
Fig. 10 is a diagram showing another display example of the display part according to the present invention;
Fig. 11 is a diagram showing the other display example of the display part according to the present invention;
Fig. 12 is a diagram showing the other display example of the display part according to the present invention;
Fig. 13 is a flowchart showing an operation of the information processing device according to the present invention;
Fig. 14 is a flowchart showing another operation of the information processing device according to the present invention;
Figs. 15A and 15B are diagrams showing another display example of the display part according to the present invention;
Fig. 16 is a block diagram showing a configuration of an information processing device according to a second exemplary embodiment of the present invention;
Fig. 17 is a block diagram showing a functional configuration of a configuration of an operation detecting part according to the second exemplary embodiment of the present invention;
Fig. 18 is a diagram for describing a configuration of a display part according to the present invention;
Fig. 19 is a diagram for describing an example of an input operation according to the present invention; and
Fig. 20 is a flowchart showing an operation of the information processing device according to the present invention.

### EXEMPLARY EMBODIMENTS

### <First Exemplary Embodiment>

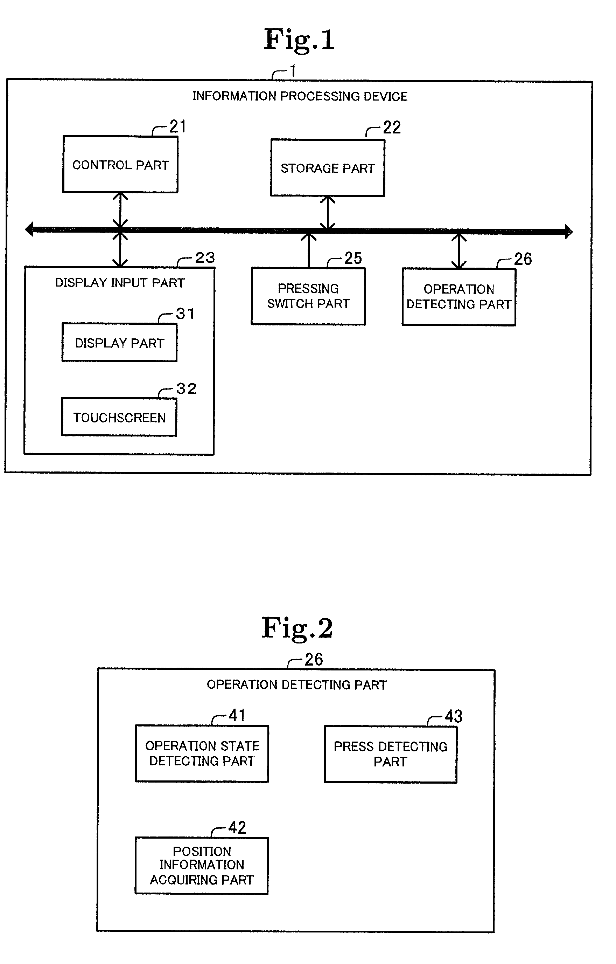

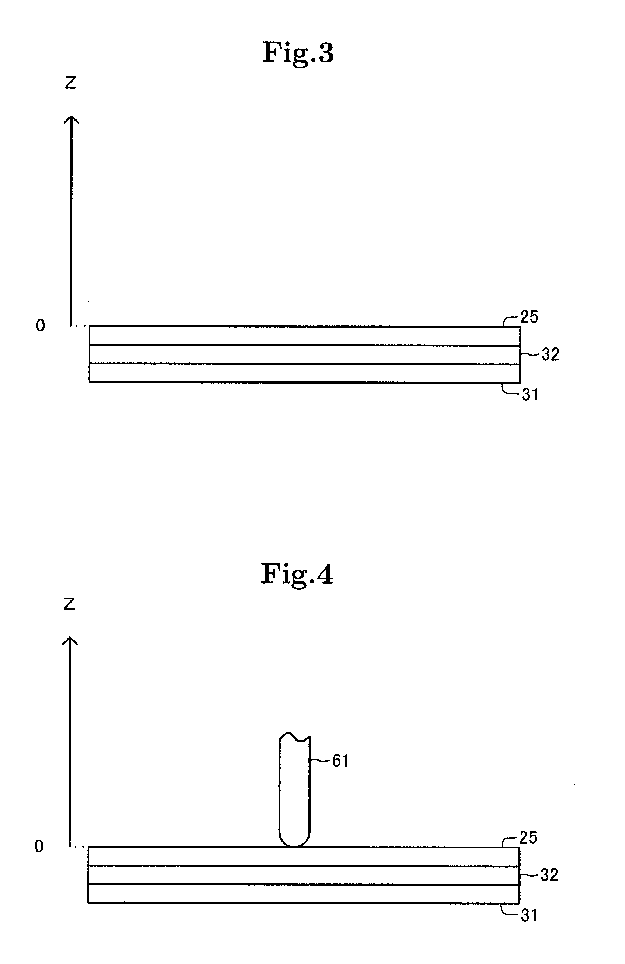

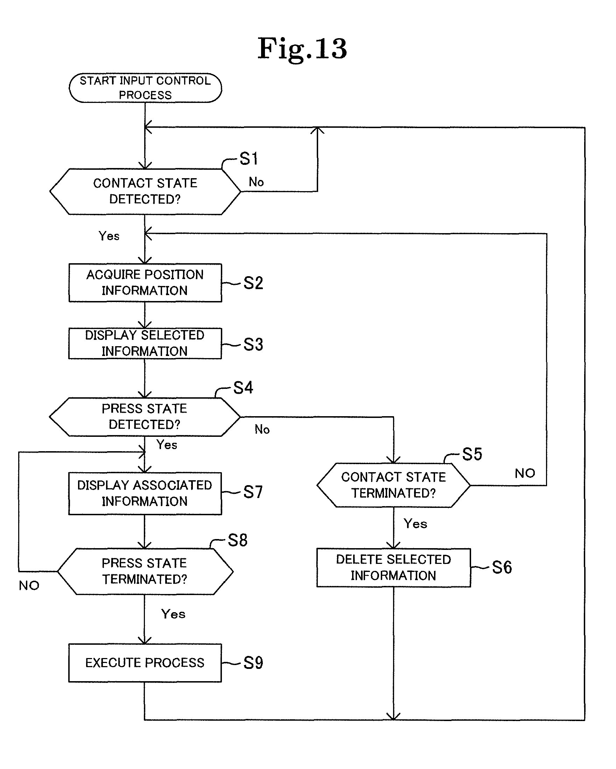

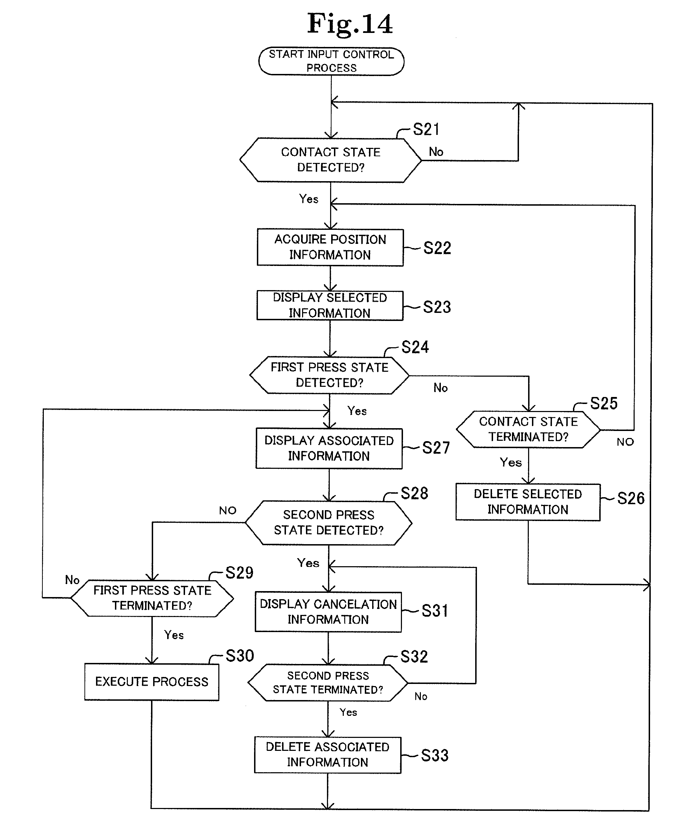

A first exemplary embodiment of the present invention will be described referring to Figs. 1 to 15. Figs. 1 and 2 are block diagrams showing a configuration of an information processing device. Figs. 3 to 12 and Fig. 15 are diagrams for describing an operation on the information processing device. Moreover, Figs. 13 and 14 are diagrams for describing an operation of the information processing device.

### [Configuration]

As shown in Fig. 1, an information processing device 1 according to this exemplary embodiment includes a control part 21, a storage part 22, a display input part 23, a pressing switch part 25, and an operation detecting part 26. The information processing device 1 is, for example, a smartphone, a tablet PC, or the like. The information processing device 1 detects the position of an operation object on the face of the display input part 23 by using the pressing switch part 25 and a touchscreen 32 (a touchscreen input device) to be described later, and accepts an input operation based on the detected position.

The information processing device 1 includes the control part 21 and the operation detecting part 26, which are controlled by a program installed in an arithmetic part such as a CPU (Central Processing Unit). The program is stored in the storage part 22. Meanwhile, the information processing device 1 can also load a program recorded on a computer-readable recording medium. The recording medium is, for example, a portable medium such as a flexible disk, an optical disk, a magneto-optical disk and a semiconductor memory.

The control part 21 controls input and output of the display input part 23. The display input part 23 includes a display part 31 and the touchscreen 32. For example, the control part 21 displays various data such as characters/letters and images on the display face of the display part 31. The display part 31 is configured by a liquid crystal display, an organic EL (electroluminescence) display, or the like. The display part 31 is not limited to the abovementioned configurations, and may be realized by any configuration.

The touchscreen 32 is a capacitive touchscreen, and is formed on the display face of the display part 31 (the face of the display input part 23). The touchscreen 32 detects contact by an operation object such as a finger and a pen with the display face of the display part 31, and a position on the display face where the operation object makes contact. The touchscreen 32 is not limited to a capacitive type, and can be any configuration that can detect contact by the operation object with the display face.

The pressing switch part 25 is formed on the display face of the display part 31, and has a configuration for detecting a press by an operation object. For example, the pressing switch part 25 includes two transparent electrodes arranged at a predetermined internal. As a result that the pressing switch part 25 detects a mutual contact between the two transparent electrodes, a press detecting part 43 shown in Fig. 2 detects a press by an operation object. The press detecting part 43 will be described later.

The pressing switch part 25 may have a configuration for detecting a position where an operation object presses. For example, the pressing switch part 25 includes a first transparent electrode having a plurality of linear electrodes wired in parallel to a certain direction, and a second transparent electrode having a plurality of linear electrodes wired in a perpendicular direction to the certain direction. Thus, the first transparent electrode is pressed along with a press by an operation object, and the pressing switch part 25 detects the linear electrode of the first transparent electrode and the linear electrode of the second transparent electrode in contact with each other and thereby specifies a position where the operation object makes contact.

Referring to Fig. 3, a configuration composed of the display part 31, the touchscreen 32 and the pressing switch part 25 will be described. Fig. 3 is a diagram showing the display part 31 with the touchscreen 32 and the pressing switch part 25 formed on the display face thereof. As shown in Fig. 3, the information processing device 1 has the display part 31 at the bottom, has the touchscreen 32 on the display face of the display part 31, and has the pressing switch part 25 on the touchscreen 32. Although a case where the pressing switch part 25 is formed on the display face of the display part 31 will be described as an example, the configuration composed of the display part 31, the touchscreen 32 and the pressing switch part 25 is not limited to this one. For example, the configuration can be any configuration capable of detecting that the display part 31 (to be specific, a pressing switch is arranged in the lower part of the display part 31) or a transparent protection member (glass) covering the display part 31 is pressed, namely, any configuration capable of detecting a contact state and a press state. The order of arranging the display part 31, the touchscreen 32 and the pressing switch part 25 is not limited to the abovementioned one, and may be realized by any configuration.

Fig. 4 shows an example of a state where a finger 61 serving as an operation object comes in contact with the display face. In the example shown in Fig. 4, the finger 61 is in contact with the face of the pressing switch part 25 arranged at the top of the display part 31. Then, the touchscreen 32 detects a state where the finger 61 (an operation object) is in contact with a face where contact can be detected (e.g., the face of the pressing switch part 25), as contact by the operation object with the display face. On the other hand, in the state shown in Fig. 4, the pressing switch part 25 does not detect contact between the two transparent electrodes, and the press detecting part 43 does not detect a press.

Next, referring to Fig. 2, detection of the operation state of an operation object will be described in detail. Fig. 2 is a block diagram showing a functional configuration of the operation detecting part 26. As shown in Fig. 2, the operation detecting part 26 includes function blocks of an operation state detecting part 41, a position information acquiring part 42 and a press detecting part 43. The operation detecting part 26 (an operation detecting means) detects an operation by an operation object on the display face of the display part 31.

The operation state detecting part 41 detects two different operation states in the same operation position on the display face of the display part 31. For example, the operation state detecting part 41 detects a contact state where an operation object comes in contact with the display face (a first operation state) (e.g., the state shown in Fig. 4), and a press state where an operation object presses the display face (a second operation state). The operation states are not limited to the two states including the contact state and the press state. The operation states may be three or more.

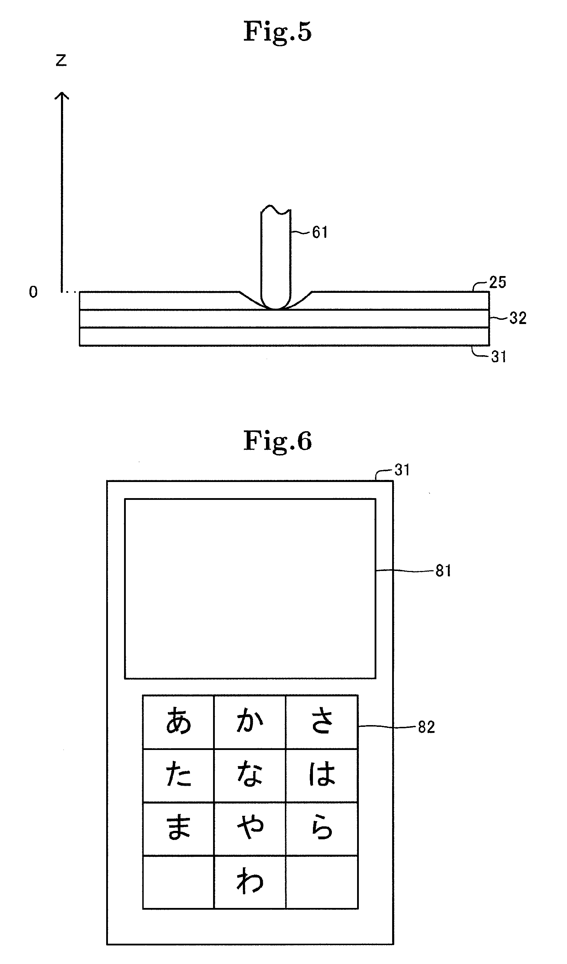

The operation state detecting part 41 detects the contact state when the touchscreen 32 detects that an operation object is in contact with the display face as shown in Fig. 4. When the finger 61 serving as the operation object presses the pressing switch part 25 in the state shown in Fig. 4, one of the transparent electrodes of the pressing switch part 25 is dented and comes in contact with the other transparent electrode as shown by an example shown in Fig. 5. At this time, the press detecting part 43 detects a press by the finger 61. When a press by the operation object is thus detected by the press detecting part 43, the operation state detecting part 41 detects the press state.

Subsequently, the position information acquiring part 42 acquires position information representing a position on the display face where the operation object makes contact, based on a position detected by the touchscreen 32. For example, the position information acquiring part 42 acquires the coordinates of the operation object in contact with the display face with respect to the center of gravity of the contact region, as position information. Meanwhile, the position information acquiring part 42 may be configured to, in a case where a press is detected by the pressing switch part 25 (i.e., in the press state), acquire position information of an operation object pressing the display face, based on information detected by the pressing switch part 25. Besides, information such as a character/letter and an image to be displayed on the display part 31 is previously related to position information.

Then, the control part 21 executes a preset process based on the operation state and position information of the operation object. When the contact state is detected by the operation state detecting part 41, the control part 21 (a controlling means) gives an instruction for designation of specified information selected by the operation object (i.e., information related to the position information acquired by the position information acquiring part 42). This instruction for designation of specified information merely brings a state where specified information that the user desires to input is designated, and the specified information that the control part 21 gives an instruction to designate can be abandoned and canceled as described later. Moreover, when the press state is detected by the operation state detecting part 41, the control part 21 gives an instruction for confirmation of specified information. This instruction for confirmation of specified information is a state where the user confirms the input of information that the user desires to input, and associated information which is associated with a selected item is displayed as described later. The instruction for confirmation of specified information is not limited to a process of displaying associated information.

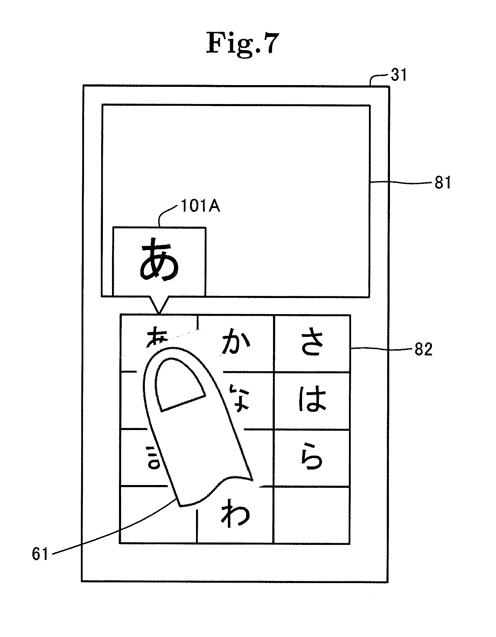

Referring to Figs. 6 to 9, a specific process executed by the control part 21 will be described. Fig. 6 is a diagram showing an example of an image displayed on the display part 31. As shown in Fig. 6, when input of a character is instructed, the control part 21 displays an input display region 81 and a virtual input region 82 on the display part 31. The input display region 81 is a region for displaying a character that the input thereof is confirmed based on an input operation by an operation object. The virtual input region 82 is a region for displaying an input interface such as a virtual keyboard. For example, the display part 31 displays the respective characters of the "a" row in the virtual input region 82. However, characters (images) displayed in the virtual input region 82 are not limited to the respective characters of the "a" row. For example, characters displayed in the virtual input region 82 may be alphabets, symbols, or the like. An operation of the control part 21 when the user inputs the character "ki" will be described as an example referring to Figs. 7 to 9. Although a case where an operation object is the finger 61 will be described below, an operation object is not limited to a finger.

As shown in Fig. 7, in a case where the user touches the character "a" in spite of attempting to touch the character "ka" (in a case where the finger 61 touches the display face of the character "a" displayed in the virtual input region 82), the control part 21 displays a selected character 101A (selected information) which is a magnified character "a" above the character "a" displayed in the virtual input region 82 (i.e., in the upper part in Fig. 7). The selected character 101A (selected information) of a magnified character "a" is previously related to the character "a." Likewise, to each of the other characters, selected information which is a magnified character of the character is related. That is, in a case where the contact state is detected by the operation state detecting part 41 (in a case where contact is detected by the touchscreen 32 and it is determined by the press detecting part 43 that the pressing switch part 25 is not pressed), the control part 21 displays the selected character 101A related to a character with which an operation object is in contact, on the display part 31.

A display position to display selected information is not limited to above a character with which an operation object is in contact, and may be around the character. Moreover, the display position may be in the virtual input region 82 or in the input display region 81, for example, whichever display of characters in the virtual input region 82 is not obstructed (e.g., a character position next to a string of characters that input thereof is confirmed before Japanese conversion and that the conversion is not confirmed). For example, selected information may be displayed in a position where a character is to be inputted next to a string of characters before conversion (e.g., a string of hiragana characters before conversion into kanji characters) among inputted strings of characters displayed in the input display region 81. Moreover, selected information is not limited to an image of a magnified character of a character selected by contact. For example, selected information may be a character or image selected by contact with color changed. Because a character or image with which the finger 61 is in contact is thus displayed in a display state different from a normal state, such as largely displayed, it is possible to increase the user's recognizability.

In a case where the operation state of the finger 61 (an operation object) is the contact state, the control part 21 only designates the character "a" (specified information) designated with the finger 61 (only gives a designation instruction) and does not accept input of the character "a." Therefore, when the contact state is terminated (when the state is changed from the contact state to a state where the finger 61 is away from the display face), the control part 21 cancels designation of the specified information designated with the finger 61, and deletes display of the selected information so as to return display of the display part 31 to the original state (return to the display shown in Fig. 6).

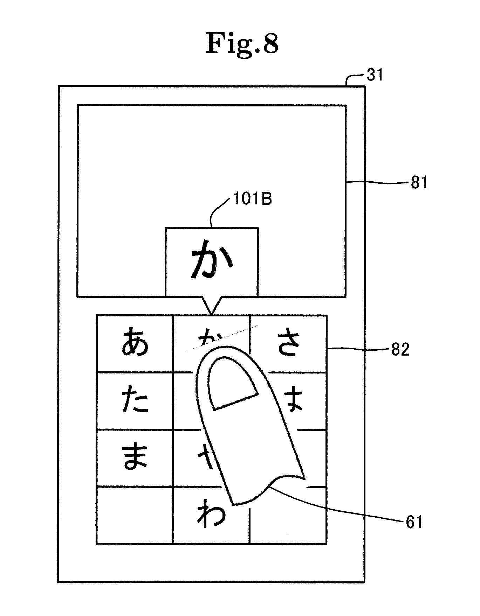

Subsequently, when the user moves the finger 61 rightward to select the character "ka" in the state shown in Fig. 7, the state becomes as shown in Fig. 8. In the example shown in Fig. 8, the finger 81 is in contact with the display face of the character "ka" displayed in the virtual input region 82. At this moment, the control part 21 displays a selected character 101B which is a magnified character "ka" above the character "ka" in the virtual input region 82 (i.e., in the upper part in Fig. 8). That is, when the finger 61 moves rightward while the contact state is maintained, the character "ka" placed on the right of the character "a" is magnified and displayed. Thus, even when the user mistakenly touches a character (e.g., the character "a") which is different from a character the user intends to touch (e.g., the character "ka") and the different character (the character "a") is inputted by the touch, the input is not accepted. Then, because the user can touch the character the user intends to touch without leaving the finger from the display face, it is possible to increase the user's operability.

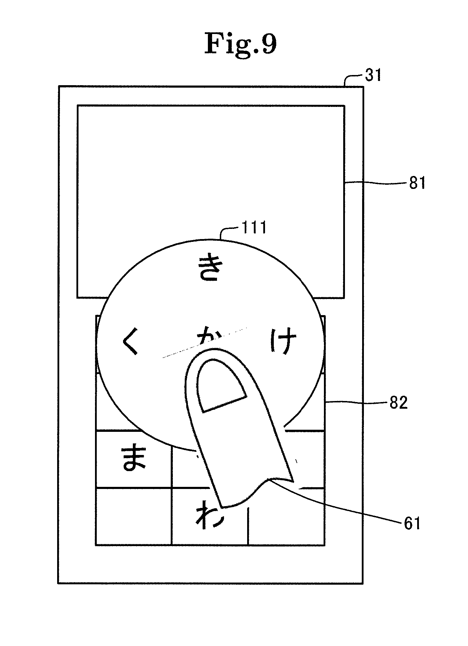

Subsequently, when the finger 61 presses down on the display face in the state shown in Fig. 8, the state becomes as shown in Fig. 9. As shown in Fig. 9, when the character "ka" is pressed down on the display face by the finger 21, the control part 21 displays associated characters 111 (associated information) in which the character "ka" is in the center and the characters "ki," "ku," "ke," and "ko" of the "ka" column are arranged around the display position of the character "ka" (e.g., arranged on the upper, lower, right and left sides of the character "ka"). In other words, in a case where it is detected by the press detecting part 43 that the pressing switch part 25 is pressed, the control part 21 displays the associated characters 111.

When the operation state of the finger 61 (an operation object) is the press state, the control part 21 gives an instruction for confirmation of the character "ka" (specified information) designated by the touch of the finger 61. After the press state, when the press state is terminated (when the state is changed to a state where the finger 61 is away from the display face), the control part 21 accepts input of a character displayed in a position where the finger 61 is in contact immediately before the press state is terminated (i.e., input of information designated immediately before the press state is terminated), and displays the character in the input display region 81. For example, after the control part 21 gives an instruction for confirmation of the character "ka," when the finger 61 moves over the character "ki" of the associated characters 111 of the character "ka" and thereafter the finger 61 leaves from the display face, the control part 21 accepts input of the character "ki" and displays in the input display region 81.

Although the associated characters 111 are displayed as an image containing the characters "ka," "ki," "ku," "ke" and "ko" (the character "ko" is not shown because hidden by the finger 61)" in the example shown in Fig. 9, display of the associated characters 111 is not limited to the above one. For example, a string of characters containing at least one of the characters "ka," "ki," "ku," "ke" and "ko" may be displayed in at least one region of the upper, lower, right and left sides of the character "ka" (e.g., a string of characters "ka," "ki," "ku," "ke" and "ko" may be displayed on the lower side of the character "ka"). The characters "ki," "ku," "ke" and "ko" may be displayed around the display position of the selected character 101B in Fig. 8. It is needless to say that the same process is executed when the finger 61 touches the characters other than the character "ka." For example, in a case where the character "sa" is pressed by the finger 61, the characters "si," "su," "se" and "so" are displayed around the display position of the character "sa." Thus, because a process preset for each of the two-stage operation states including the contact state and the press state is executed, it is possible to reduce wrong operation by the user and increase operability.

Even if a function of canceling a contact operation and a press operation by the user (a canceling function) is not provided, the input by the user is not confirmed when the contact operation as a selection operation is executed, and the input by the user is confirmed when the press operation as a confirmation operation is executed thereafter. For example, when the press state is detected by the press detecting part 43, and then, the user moves the finger 61 to any of the upper, lower, right and left sides with respect to the display face with the associated characters 111 displayed or the user does not move the finger 61, and leaves the finger 61 from the touchscreen 32, the input of any of the associated characters 111 is confirmed. Because the input is thus confirmed after a press operation (a confirmation operation) as a user's explicit operation, it is possible to reduce wrong operation by the user.

Further, the operation state detecting part 41 can detect the press state of an operation object stepwise. For example, the pressing switch part 25 may be provided with three transparent electrodes (first to third transparent electrodes in order from one directly coming in contact with an operation object) so as to detect a press in two stages. Meanwhile, a method for detecting a press state of an operation object stepwise is not limited to the abovementioned one, and may be realized by another configuration.

To be specific, the press detecting part 43 determines whether or not the first transparent electrode and the second transparent electrode of the pressing switch part 25 are in contact with each other, and also determines whether or not the second transparent electrode and the third transparent electrode of the pressing switch part 25 are in contact with each other. In a case where the press detecting part 43 determines that the first transparent electrode and the second transparent electrode are in contact with each other, and also determines that the second transparent electrode and the third transparent electrode are not in contact with each other, the operation state detecting part 41 detects a first press state. In a case where the first press state is detected, for example, the control part 21 displays the characters "ka," "ki," "ku," "ke" and "ko" as associated characters as in the example described above.

On the other hand, in a case where the press detecting part 43 determines that the second transparent electrode and the third transparent electrode are in contact with each other, the operation state detecting part 41 detects a second press state. In a case where the second press state is detected, for example, the control part 21 displays "ga," "gi," "ge," "ge" and "go," which are voiced sounds of the characters of the "ka" column, as associated characters.

Thus, by determining the press state stepwise, it is possible to execute more various processes by a simple operation. It is needless to say that determination of the press state stepwise is not limited to two-stage and may be three-stage or more. Moreover, the control part 21 may, instead of displaying associated information such as associated characters, display information containing at least information (e.g., a "cancel" button) for terminating an operation state of an operation object so that it is possible to cancel input by the user by the same operation as an operation of inputting a character. Further, in a case where, after the control part 21 displays associated information displayed at the time of contact or after press, the press detecting part 43 detects a press state of the second stage or more (e.g., a third operation state), the control part 21 may automatically delete display of the associated information (may cancel a confirmation process executed on specified information that the user has instructed to confirm). Further, the control part 21 may execute dynamic control of associated information, such as increase a region of a cancel button in accordance with stepwise determination of the press state. Although input of Japanese characters is shown in the above example, not only Japanese characters but also English letters, numbers, or the like may be inputted. Moreover, not only characters/letters but also a string of characters/letters of predictive transform candidates or a string of frequently-appearing characters/letters based on learning results may be displayed.

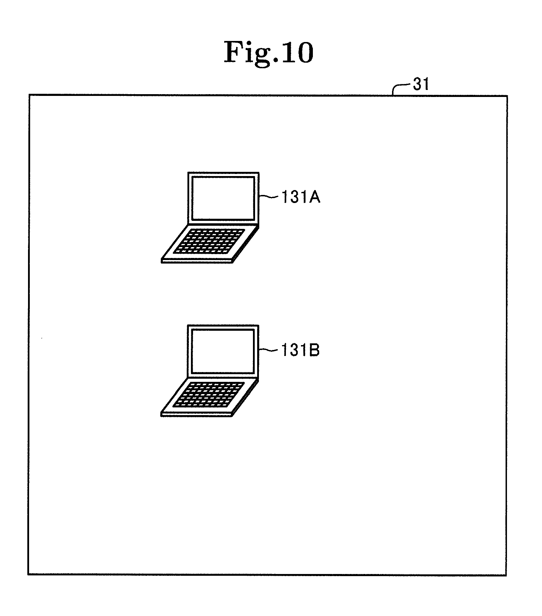

The input operation by an operation object (the finger 61) is not limited to input of characters. Referring to Figs. 10 to 12, another example of the input operation will be described. In this example, a case where the user purchases a product via a communication network such as the Internet will be described. As shown in Fig. 10, the display part 31 displays images of laptop personal computers (standard images 131A and 131B) as images of products to be sold.

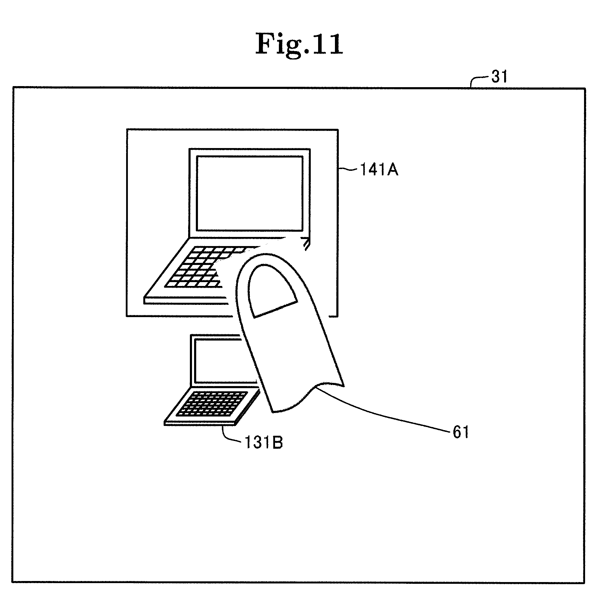

When the finger 61 comes in contact with the display face of the standard image 131A in the state shown in Fig. 10, the control part 21 displays a magnified image 141A (selected information) obtained by magnifying the standard image 131A of the laptop personal computer as shown in Fig. 11. In other words, in a case where the finger 61 is in the contact state, the control part 21 displays the magnified image 141A. Then, in a case where the operation state of the finger 61 (an operation object) is the contact state, the control part 21 gives an instruction for designation of the laptop personal computer (the standard image 131A) designated with the finger 61. Therefore, in a case where the contact state is terminated (the state is changed from the contact state to a state where the finger 61 is away from the display face), the control part 21 terminates selection of information (e.g., the laptop personal computer) designated with the finger 61, and deletes display of the magnified image 141A (selected information) so as to let the magnified image 141 A back to the standard image 131 A (let the display in Fig. 11 back to the display in Fig. 10).

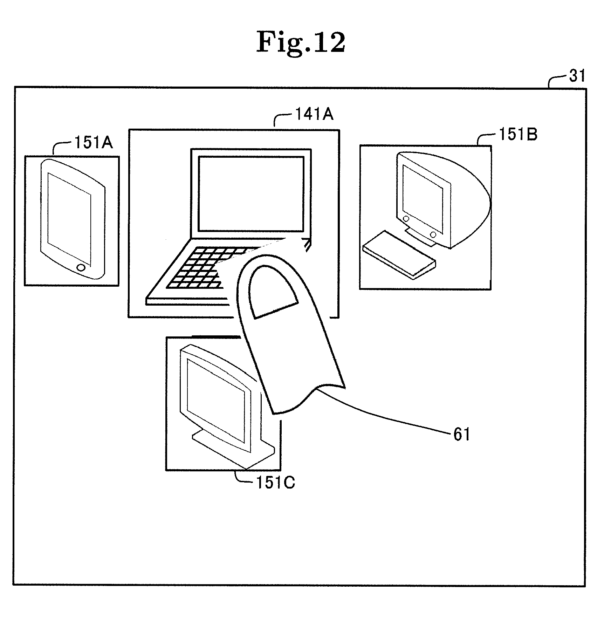

On the other hand, when the finger 61 presses down on the display face in the state shown in Fig. 11, the state becomes as shown in Fig. 12. To be specific, when the magnified image 141A of the laptop personal computer selected by contact as described above is pressed down on the display face by the finger 61, the control part 21 displays associated images 151A, 151B and 151C (associated information), which are images of products associated with the laptop personal computer of the magnified image 141A, around the display position of the magnified image 141A (e.g., on the upper, lower, right and left sides of the magnified image 141A) as shown in Fig. 12. Associated information is, for example, other products that other users having purchased the laptop personal computer of the magnified image 141A often purchase. It is needless to say that the associated products are not limited to the abovementioned ones and can be any products that are associated with the product designated with the finger 61, for example, peripheral equipment of the laptop personal computer of the magnified image 141A.

In a case where the operation state of the finger 61 (an operation object) is the press state, the control part 21 confirms the selection of the product designated with the finger 61. Then, in a case where the press state is terminated (in a case where the state is changed from the press state to a state where the finger 61 is away from the display face), the control part 21 starts a process for purchasing a product displayed in a position where the finger 61 is in contact immediately before termination of the press state (specified information or associated information designated immediately before termination of the press state).

The control part 21 may display, as associated information, processes (a menu) set in association with an image (an item) designated with the finger 61, such as "copy" "store" and "print" the magnified image 141A, in a case where the operation state of the finger 61 (an operation object) is the press state. The displayed processes (menu) are not limited to the abovementioned one. Thus, because two different operations are executed in accordance with the two-stage operation states including the contact state and the press state, the input operation by the user is facilitated, and it is possible to increase operability.

Further, in the information processing device 1 described above, a press is detected by the pressing switch part 25, but a press may be detected by using a pressure sensor or the like. For example, when it is determined that the value of pressure detected by the pressure sensor is equal to or more than a preset threshold, the operation state detecting part 41 detects the press state. On the other hand, when the value of pressure detected by the pressure sensor is more than 0 and is less than a threshold, the operation state detecting part 41 detects the contact state. Thus, it is possible to detect the press state based on the level of the pressure.

Furthermore, in a case where the user conducts a consecutive operation such as flicking from the abovementioned press state, the level of pressure in the press state may vary temporarily. Therefore, the operation state detecting part 41 may use hysteretic control to detect the stepwise press state. For example, the abovementioned two thresholds (a first threshold and a second threshold (first threshold < second threshold)) are set and, in a case where the value of pressure detected by the pressure sensor changes from a value less than the second threshold to a value equal to or more than the second threshold, the state detected by the operation state detecting part 41 shifts from the contact state (or a non-press state) to the press state. Moreover, in a case where the value of pressure detected by the pressure sensor changes from a value equal to or more than the first threshold to a value less than the first threshold, the state detected by the operation state detecting part 41 shifts from the press state to the contact state. Consequently, in a case where, after a press is detected and the state shifts to the press state, the pressure of the press is decreased by an additional operation (e.g., flicking), it is possible to prevent a wrong operation such as determining that the operation is the contact operation (detecting the contact state). Moreover, in order to select each operation state and maintain (fix) the operation state, the detected pressure value may be maintained until a preset time.

Thus, by determining the level of pressure in the press state stepwise, it is possible to execute more various processes by a simple operation. It is needless to say that determination of the level of pressure in the press state is not limited to two-stage, and may be three-stage or more.

### [Operation]

Next, referring to a flowchart shown in Fig. 13, an operation of the information processing device 1 will be described. Fig. 13 is a flowchart for describing an input control process by the information processing device 1.

First, at step S1, the operation state detecting part 41 determines whether or not it has detected the contact state. In other words, the operation state detecting part 41 determines whether or not the touchscreen 32 has detected contact by the operation object with the display face. In a case where the operation state detecting part 41 determines at step S1 that it has not detected the contact state (step S1: No), the process returns to step S1 and the same step is repeated. On the other hand, in a case where the operation state detecting part 41 determines at step S1 that it has detected the contact state (step S1: Yes), at step S2, the position information acquiring part 42 acquires position information representing a position on the display face where the operation object is in contact.

Subsequently, at step S3, considering information related to the acquired position information as specified information selected with the operation object, the control part 21 gives an instruction for designation of the specified information, and displays selected information previously set for the specified information on the display part 31. The selected information is, for example, a magnified image of an image (specified information) designated with the operation object (e.g., see Figs. 7, 8 and 11).

Next, at step S4, the operation state detecting part 41 determines whether or not it has detected the press state. To be specific, the press detecting part 43 determines whether or not a press by the pressing switch part 25 has been detected. Then, based on the result of the determination by the press detecting part 43, the operation state detecting part 41 determines whether or not it has detected the press state. In a case where the operation state detecting part 41 determines at step S4 that it has not detected the press state (step S4: No), the process proceeds to step S5.

Then, at step S5, the operation state detecting part 41 determines whether or not the contact state has been terminated. In a case where the operation state detecting part 41 determines at step S5 that the contact state has not been terminated (step S5: No), the process returns to step S2 and the steps thereafter are repeated.

On the other hand, in a case where the operation state detecting part 41 determines at step S5 that the contact state has been terminated (step S5: Yes), the control part 21 deletes the selected information at step S6. In other words, in a case where the operation state of the operation object has not changed from the contact state to the press state and the contact state has been terminated (in a case where the operation state has changed to a state where the operation object is away from the display face), the control part 21 deletes the selected information of the item designated with the operation object so as to return to the state before the selected information is displayed. After step S6, the process returns to step S1, and the steps thereafter are repeated.

On the other hand, in a case where the operation state detecting part 41 determines at step S4 that it has detected the press state (step S4: Yes), at step S7, the control part 21 gives an instruction for confirmation of the specified information and displays associated information of the specified information (e.g., see Figs. 9 and 12). The associated information is, for example, information associated with the specified information designated with the operation object.

Subsequently, at step S8, the operation state detecting part 41 determines whether or not the press state has been terminated. In a case where the operation state detecting part 41 determines at step S8 that the press state has not been terminated (step S8: No), the process returns to step S4, and the steps thereafter are repeated. On the other hand, in a case where the operation state detecting part 41 determines at step S8 that the press state has been terminated (step S8: Yes), at step S9, the control part 21 executes a process previously related to the specified information designated with the operation object. In the example shown in Fig. 9, the control part 21 executes a process of inputting a character. After step S9, the process returns to step S1, and the steps thereafter are repeated. That is, in a case where the press state of the operation object has been terminated, the control part 21 executes a process previously related to the specified information designated with the operation object.

As mentioned above, the information processing device 1 can detect the press state stepwise by using a pressure sensor instead of the pressing switch part 25. Referring to Fig. 14, an operation of the information processing device 1 in the case of detecting the press state stepwise will be described. Because steps S21 to S23, steps S25 to S28 and step S30 correspond to steps S1 to S3 and steps S5 to S9, respectively, a description thereof will be simplified.

First, at step S21, the operation state detecting part 41 determines whether or not it has detected the contact state. In a case where the operation state detecting part 41 determines at step S21 that it has not detected the contact state (step S21: No), the process returns to step S21 and the same step is repeated. On the other hand, in a case where the operation state detecting part 41 determines at step S21 that it has detected the contact state (step S21: Yes), at step S22, the position information acquiring part 42 acquires position information representing a position on the display face where the operation object is in contact.

Subsequently, at step S23, considering information related to the acquired position information as specified information selected with the operation object, the control part 21 gives an instruction for designation of the specified information, and displays selected information previously set for the specified information on the display part 31. Next, at step S24, the operation state detecting part 41 determines whether or not it has detected a first press state. To be specific, the operation state detecting part 41 determines whether or not the value of pressure detected by the pressure sensor is equal to or more than a preset threshold Th₁. Then, based on the result of the determination by the pressure sensor, the operation state detecting part 41 determines whether or not it has detected the first press state. In a case where the operation state detecting part 41 determines at step S24 that it has not detected the first press state (step S4: No), the process proceeds to step S25.

Then, at step S25, the operation state detecting part 41 determines whether or not the contact state has been terminated. In a case where the operation state detecting part 41 determines at step S25 that the contact state has not been terminated (step S25: No), the process returns to step S22 and the steps thereafter are repeated. On the other hand, in a case where the operation state detecting part 41 determines at step S25 that the contact state has been terminated (step S25: Yes), the control part 21 deletes the selected information at step S26. After step S26, the process returns to step S21, and the steps thereafter are repeated.

On the other hand, in a case where the operation state detecting part 41 determines at step S24 that it has detected the first press state (step S24: Yes), the control part 21 gives an instruction for confirmation of the specified information and displays associated information of the specified information at step S27. Subsequently, at step S28, the operation state detecting part 41 determines whether or not it has detected a second press state. The second press state is a state where the operation object presses the display face more than in the first press state. To be specific, the operation state detecting part 41 determines whether or not the value of pressure detected by the pressure sensor is equal to or more than a preset threshold Th₂ (threshold Th₁ < threshold Th₂). Then, based on the result of the determination by the pressure sensor, the operation state detecting part 41 determines whether or not it has detected the second press state. In a case where the operation state detecting part 41 determines at step S28 that it has not detected the second press state (step S28: No), the process proceeds to step S29.

Subsequently, at step S29, the operation state detecting part 41 determines whether or not the first press state has been terminated. In a case where the operation state detecting part 41 determines at step S29 that the first press state has not been terminated (step S29: No), the process returns to step S27, and the steps thereafter are repeated. On the other hand, in a case where the operation state detecting part 41 determines at step S29 that the first press state has been terminated (step S29: Yes), at step S30, the control part 21 executes a process previously related to the specified information designated with the operation object. After step S30, the process returns to step S21, and the steps thereafter are repeated.

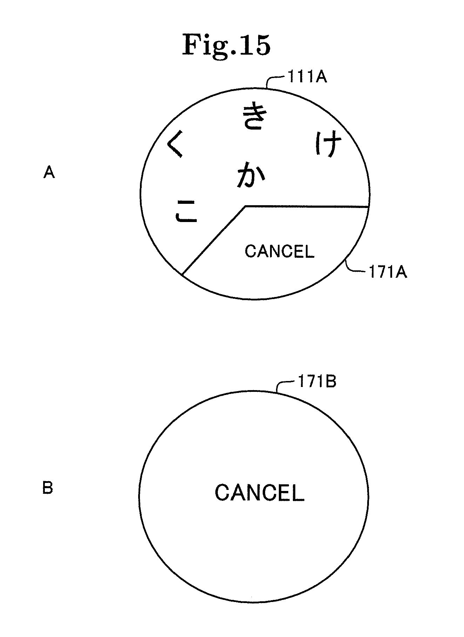

Further, on the other hand, in a case where the operation state detecting part 41 determines at step S28 that it has detected the second press state (step S24: Yes), the control part 21 displays cancelation information. The cancelation information is information for canceling an input operation. Referring to Figs. 15A and 15B, cancelation information 171 will be described. As shown in Fig. 15A, cancelation information 171A is a region which shows the characters of "cancel" and which is displayed at the bottom in a region where the associated characters 111 (e.g., see Fig. 9) are displayed. For displaying the cancelation information 171A, the control part 21 moves the characters (e.g., the characters "ku," "ke" and "ko") displayed as the associated characters 111 so as not to overlap the display of the cancelation information 171A. The control part 21 can change the size of the display of the cancelation information 171 in accordance with the level of the pressure detected by the pressure sensor. For example, the higher the level of the pressure detected by the pressure sensor is, the more largely the control part 21 can display the cancelation information 171. Meanwhile, as shown in Fig. 15B, the control part 21 may display only cancelation information 171B when the second press state is detected after the associated information is displayed.

Subsequently, at step S32, the operation state detecting part 41 determines whether or not the second press state has been terminated. In a case where the operation state detecting part 41 determines at step S32 that the second press state has not been terminated (step S32: No), the process returns to step S31, and the steps thereafter are repeated. On the other hand, in a case where the operation state detecting part 41 determines at step S32 that the second press state has been terminated (step S32: Yes), the control part 21 deletes the associated information at step S33. In other words, when the second press state is terminated, the control part 21 deletes the associated information of the specified information designated with the operation object so as to return the display to the state before the selected information and the associated information are displayed. After step S33, the process returns to step S21, and the steps thereafter are repeated.

Thus, because it is possible to execute various processes in accordance with a plurality of stepwise operation states in the same operation position on the display face, it is possible to increase operability. Although the above example illustrates a case where the press state is two-step, the press state may be three-step or more. For example, the control part 21 may be configured to display the associated character 111 showing the characters of "ka," "ki," "ku," "ke" and "ko" when a first press state is detected, display associated information showing the characters of "ga," "gi," "gu," "ge" and "go" when a second press state is detected, and display the cancelation information 171 when a third press state is detected.

### <Second Exemplary Embodiment>

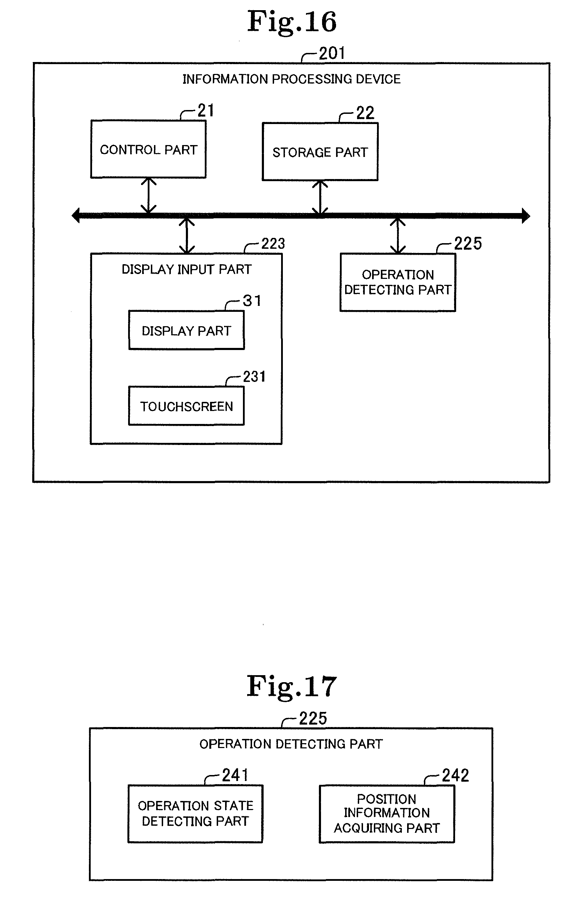

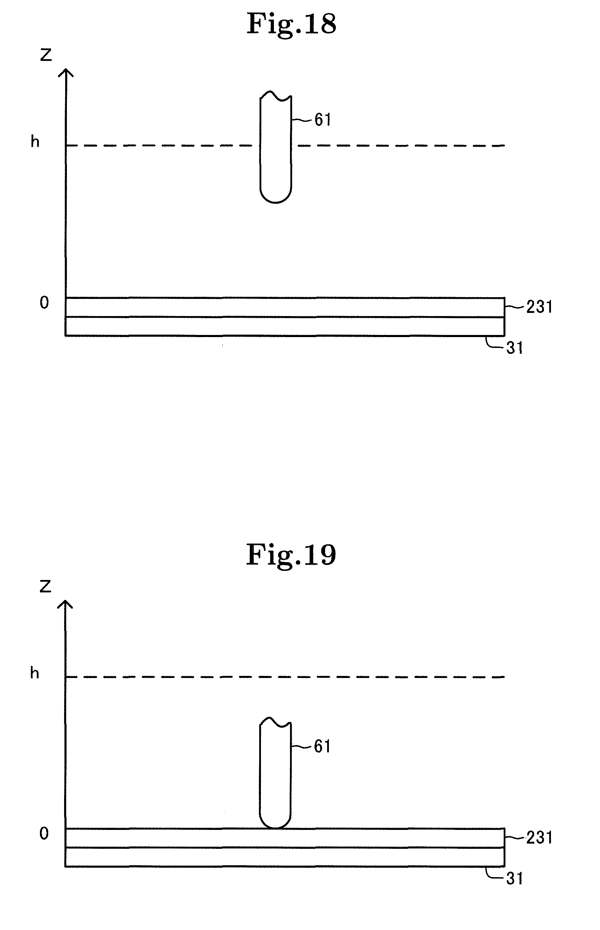

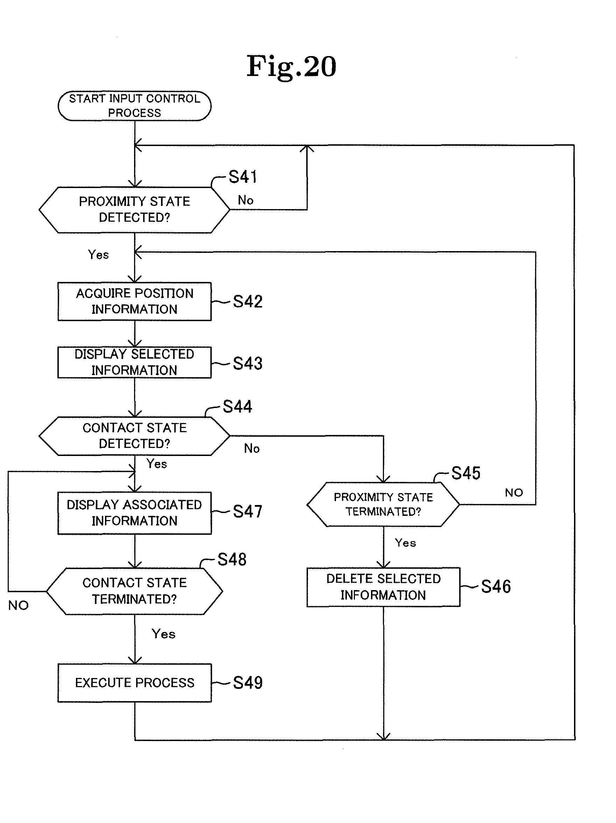

Next, a second exemplary embodiment of the present invention will be described referring to Figs. 16 to 20. Figs. 16 and 17 are block diagrams showing the configuration of an information processing device, and Fig. 18 is a diagram showing an aspect of an operation executed on the information processing device. Moreover, Fig. 20 is a diagram for describing an operation of the information processing device.

### [Configuration]

As shown in Fig. 16, an information processing device 201 according to this exemplary embodiment includes the control part 21, the storage part 22, a display input part 223, and an operation detecting part 225. In the information processing device 201 shown in Fig. 16, components corresponding to those of the information processing device 1 shown in Fig. 1 are denoted by the same reference numerals. In other words, the information processing device 201 is different from the information processing device 1 in that the information processing device 201 does not have the pressing switch part 25, the touchscreen 32 or the operation detecting part 26 and has the operation detecting part 225 and a touchscreen 231 to be described later. The other components are the same as those of the information processing device 1. Therefore, the same components will be simply described.

The information processing device 201 includes the control part 21 and the operation detecting part 225, which are controlled by a program installed in an arithmetic part such as a CPU. The display part 31 is configured by a liquid crystal display, an organic EL display, or the like. The touchscreen 231 is a capacitive touchscreen, and is formed on the display face of the display part 31. The touchscreen 231 detects proximity and contact by an operation object such as a finger and a pen with respect to the display face of the display part 31, and a position where the operation object is in proximity or contact. The touchscreen 231 is not limited to a capacitive type, and may be any configuration that can detect proximity and contact by an operation object with respect to the display face. Moreover, proximity and contact may be detected by, instead of using the touchscreen 231, using an imaging device to image an operation object and measure the position and distance thereof, or by using the combination of an proximity sensor and an ambient light sensor using infrared and ultrasound formed adjacent to a display device such as a liquid crystal display and an organic EL display.

Referring to Fig. 18, the configuration of the display part 31 and the touchscreen 231 will be described. Fig. 18 is a diagram showing the display part 31 with the touchscreen 231 formed on the display face thereof. As shown in Fig. 18, the information processing device 201 has the display part 31 at the bottom, and has the touchscreen 231 on the display face of the display part 31. However, the order of arrangement of the display part 31 and the touchscreen 231 is not limited to the abovementioned one.

The touchscreen 231 detects the finger 61 located in the perpendicular direction (the z-axis direction) to the touchscreen 231 (the display face). For example, as shown in Fig. 18, the touchscreen 231 determines whether or not it possible to detect that an operation object is located over the touchscreen 231 (e.g., the finger 61 (an operation object) is located within a predetermined range h). Then, in a case where the touchscreen 231 determines that it is possible to detect that an operation object is not in contact with and is over the touchscreen 231, the operation state detecting part 41 to be described later detects that the operation state is a proximity state. Meanwhile, the operation state detecting part 241 can detect the proximity state of an operation object stepwise.

Next, the operation detecting part 225 shown in Fig. 17 detects the position of the operation object in the perpendicular direction to the display face of the display part 31. Referring to Fig. 17, a functional configuration of the operation detecting part 25 will be described. Fig. 17 is a block diagram showing the functional configuration of the operation detecting part 225. As shown in Fig. 17, the operation detecting part 225 includes functional blocks of an operation state detecting part 241 and a position information acquiring part 242.

The operation state detecting part 241 detects the operation state of an operation object on the display face of the display part 31. The operation state detecting part 241 detects a proximity state (a first operation state) where an operation object is in proximity to the display face (e.g., see Fig. 18), and a contact state (a second operation state) where an operation object is in contact with the display face, as the operation states. The operation state detecting part 241 detects the contact state in a case where the touchscreen 231 determines that an operation object is in contact with the display face. For example, when the finger 61 shown in Fig. 18 gets closer to the display face, the state becomes as shown in Fig. 19. When the finger 61 comes in contact with the face of the touchscreen 231 as shown in Fig. 19, the touchscreen 231 detects contact by the operation object with the display face. Then, the operation state detecting part 241 detects the contact state.

The position information acquiring part 242 acquires position information representing a position on the display face where an operation object is in contact, or a position on the display face of a proximate operation object, based on the position detected by the touchscreen 231. For example, the position information acquiring part 242 acquires the coordinates of an operation object in contact with the display face with respect to the center of gravity of a region, as position information.

Then, the control part 21 executes a process in accordance with an input operation by the operation object, based on the operation state detected by the operation state detecting part 241 and the position information acquired by the position information acquiring part 242. A process in accordance with an input operation by the operation object is, for example, the same process as described referring to Figs. 6 to 12.

### [Operation]

Next, referring to a flowchart shown in Fig. 20, an operation of the information processing device 201 will be described. Fig. 20 is a flowchart for describing an input control process by the information processing device 201.

First, at step S41, the operation state detecting part 241 determines whether or not it has detected the proximity state. In other words, the operation state detecting part 241 determines whether or not it is possible to detect that an operation object is not in contact with the display face and is located over the touchscreen 231. In a case where the operation state detecting part 241 determines at step S41 that it has not detected the proximity state (step S41: No), the process returns to step S41, and the same step is repeated. On the other hand, in a case where the operation state detecting part 241 determines at step S41 that it has detected the proximity state (step S41: No), at step S42, the position information acquiring part 242 acquires position information representing a position on the display face where the operation object is in proximity.

Subsequently, at step S43, the control part 21 gives an instruction for designation of specified information selected with the operation object, and displays selected information preset for the specified information on the display part 31. Selected information is, for example, a magnified image of an image (specified information) designated with an operation object (e.g., see Figs. 7, 8 and 11).

Next, at step S44, the operation state detecting part 241 determines whether or not it has detected the contact state. In other words, the operation state detecting part 241 determines whether or not the touchscreen 231 has detected contact of the operation object with the display face. In a case where the operation state detecting part 241 determines at step S44 that it has not detected the contact state (step S44: No), the process proceeds to step S45.

Then, at step S45, the operation state detecting part 241 determines whether or not the proximity state has been terminated. In a case where the operation state detecting part 241 determines at step S45 that the proximity state has not been terminated (step S45: No), the process returns to step S42, and the steps thereafter are repeated.

On the other hand, in a case where the operation state detecting part 241 determines at step S45 that the proximity state has been terminated (step S45: Yes), the control part 21 deletes the selected information at step S46. In other words, when the operation state of the operation object does not change from the proximity state to the contact state and the proximity state is terminated, the control part 21 deletes the selected information of the specified information designated with the operation object so as to let the state back to the state before the selected information is displayed. After step S46, the process returns to step S41, and the steps thereafter are repeated.

On the other hand, in a case where the operation state detecting part 241 determines at step S44 that it has detected the contact state (step S44: Yes), at step S47, the control part 21 gives an instruction for confirmation of the specified information, and displays associated information of the specified information (e.g., see Figs. 9 and 12). Associated information is, for example, information associated with specified information designated with an operation object.

Subsequently, at step S48, the operation state detecting part 241 determines whether or not the contact state has been terminated. In a case where the operation state detecting part 241 determines at step S48 that the contact state has not been terminated (step S48: No), the process proceeds to step S44, and the steps thereafter are repeated. On the other hand, in a case where the operation state detecting part 241 determines at step S48 that the contact state has been terminated (step S48: Yes), at step S49, the control part 21 executes a process previously related to the specified information designated with the operation object. In other words, when the operation state of the operation object changes from the contact state to a state where the operation object is not detected, the control part 21 executes a process previously related to an item designated with the operation object. After step S49, the process returns to step S41, and the steps thereafter are repeated. In other words, when the contact state of the operation object is terminated, the control part 21 executes the process previously related to the specified information designated with the operation object.

In the present invention, the first and second exemplary embodiments described above may be combined so that an operation state detecting part detects at least three operation states including a proximity state, a contact state and a press state. In this case, a control part executes a process corresponding to each of the operation states.

### <Supplementary Notes>

The whole or part of the exemplary embodiments disclosed above can be described as the following supplementary notes. The outline of the configurations of an information processing device and so on according to the present invention will be described below. However, the present invention is not limited to the following configurations.

### (Supplementary Note 1)

An information processing device comprising:
a display input part accepting an operation of an operation object;
an operation detecting means for accepting an input operation of the operation object by detecting an operation position of the operation object on a face of the display input part; and
a controlling means for executing a preset process in accordance with the input operation, wherein:
   the operation detecting means is configured to, based on the accepted input operation, detect either a first operation state or a second operation state in a same operation position on the face of the display input part; and
   the controlling means is configured to, when the operation detecting means detects the first operation state, give an instruction for designation of specified information selected by the input operation, and, when the operation detecting means detects the second operation state, give an instruction for confirmation of the specified information.

According to this, because two different operation states are detected in the same operation position on the face of the display input part and a process in accordance with the detected operation state is executed, it is possible to increase the user's operability.

### (Supplementary Note 2)

The information processing device according to Supplementary Note 1, wherein:
the controlling means is configured to, when the operation detecting means detects the second operation state after detecting the first operation state, give an instruction for confirmation of the specified information with an instruction for designation given; and
the controlling means is configured to, when the first operation state is terminated without detection of the second operation state after the first operation state is detected by the operation detecting means, terminate designation of the specified information with an instruction for designation given.

According to this, when the user makes contact with a different item from an intended item by his/her wrong operation, input of the item is not accepted. Therefore, the user can make contact with intended information without leaving his/her finger from the display face, and it is possible to increase the user's operability.

### (Supplementary Note 3)

The information processing device according to Supplementary Note 1 or 2, wherein the controlling means is configured to, when the second operation state is detected after the first operation state is detected, display associated information previously associated with the specified information, around a display position of the specified information.

According to this, based on the operation state in the same operation position on the display face, associated information is displayed around the display position of a designated item. Therefore, the user can execute more various processes by a simple operation.

### (Supplementary Note 4)

The information processing device according to Supplementary Note 3, wherein the controlling means is configured to, when the second operation state is terminated after the second operation state is detected, execute a process which is previously related to the specified information or the associated information selected immediately before the second operation state is terminated.

According to this, because a process related to an item designated immediately before the second operation state is terminated is executed, the user can securely execute a process desired by the user by a simple operation.

### (Supplementary Note 5)

The information processing device according to any of Supplementary Notes 1 to 4, wherein the controlling means is configured to, when the operation detecting means detects the first operation state, display designated information previously related to the specified information, around a display position of the specified information.

According to this, around the display position of specified information designated by the user, selected information related to the designated information, for example, a magnified image of the designated information is displayed. Therefore, the user can easily check the designated item.

### (Supplementary Note 6)

The information processing device according to Supplementary Note 5, wherein the controlling means is configured to, when the first operation state is terminated without detection of the second operation state after the first operation state is detected by the operation detecting means, delete display of the designated information.

According to this, when the first operation state is terminated without detection of the second operation state after the first operation state is detected, display of selected information is deleted. Therefore, when the user conducts a wrong operation, the user can easily cancel the operation, and it is possible to increase operability.

### (Supplementary Note 7)

The information processing device according to any of Supplementary Notes 1 to 6, wherein the operation detecting means is configured to detect a contact state as the first operation state and detect a pressure state as the second state, the contact state being a state in which the operation object is in contact with the face of the display input part, and the pressure state being a state in which, in the contact state, the operation object pressures the contact face at a predetermined pressure.

According to this, in the case of making contact with a face which can detect contact by a touchscreen, the user can cancel the contact operation if the user does not press the face more. Therefore, when the user conducts a wrong operation, the user can easily cancel the operation, and it is possible to increase operability.

### (Supplementary Note 8)

The information processing device according to any of Supplementary Notes 1 to 6, wherein the operation detecting means is configured to detect a contact state as the first operation state and detect a press state as the second state, the contact state being a state in which the operation object is in contact with the face of the display input part, and the press state being a state in which, in the contact state, the operation object presses the contact face more.

According to this, in the case of making contact with a face which can detect contact by a touchscreen, the user can cancel the contact operation if the user does not press the face more. Therefore, when the user conducts a wrong operation, the user can easily cancel the operation, and it is possible to increase operability.

### (Supplementary Note 9)

The information processing device according to any of Supplementary Notes 1 to 6, wherein the operation detecting means is configured to detect a proximity state as the first operation state and detect a contact state as the second operation state, the proximity state being a state in which it is possible to detect that the operation object is not in contact with the face of the display input part and is located over the face of the display input part, and the contact state being a state in which the operation object is in contact with the face of the display input part.

According to this, in a state where it is possible to detect that an operation object is located over a touchscreen, the user can cancel the proximity operation as far as the user does not make contact with a face which can detect contact by the touchscreen. Therefore, when the user conducts a wrong operation, the user can easily cancel the operation, and it is possible to increase operability.

### (Supplementary Note 9-2)

The information processing device according to Supplementary Note 9, wherein:
the operation detecting means is configured to further detect a pressure state as a third operation state, the pressure state being a state in which, in the contact state, the operation object pressures the contact face at a predetermined pressure; and
the controlling means is configured to, when the third operation state is detected by the operation detecting means, cancel a process of confirmation of the specified information with an instruction for confirmation given.

According to this, by pressuring the face of the display input part more in a state where the operation object is in contact, an operation by the operation object is canceled. Therefore, the user can cancel the input operation by a simple operation, and it is possible to prevent the user from conducting a wrong operation.

### (Supplementary Note 10)

An information processing method by an information processing device including a display input part accepting an operation of an operation object, the information processing method comprising:
accepting an input operation of the operation object by detecting an operation position of the operation object on a face of the display input part, and, based on the accepted input operation, detecting either a first operation state or a second operation state in a same operation position on the face of the display input part; and
when the first operation state is detected, giving an instruction for designation of specified information selected by the input operation, and, when the second operation state is detected, giving an instruction for confirmation of the specified information.

### (Supplementary Note 11)

The information processing method according to Supplementary Note 10, comprising:
when the second operation state is detected after the first operation state is detected, giving an instruction for confirmation of the specified information with an instruction for designation given, and, when the first operation state is terminated without detection of the second operation state after the first operation state is detected, terminating designation of the specified information with an instruction for designation given.

### (Supplementary Note 12)

A computer program comprising instructions for causing an information processing device including a display input part accepting an operation of an operation object, to realize:
an operation detecting means for accepting an input operation of the operation object by detecting an operation position of the operation object on a face of the display input part; and
a controlling means for executing a preset process in accordance with the input operation,
the computer program comprising instructions for causing the information processing device to realize that:
the operation detecting means is configured to, based on the accepted input operation, detect either a first operation state or a second operation state in a same operation position on the face of the display input part; and
the controlling means is configured to, when the operation detecting means detects the first operation state, give an instruction for designation of specified information selected by the input operation, and, when the operation detecting means detects the second operation state, give an instruction for confirmation of the specified information.

### (Supplementary Note 13)

The computer program according to Supplementary Note 12, wherein the controlling means is configured to, when the second operation state is detected after the first operation state is detected, give an instruction for confirmation of the specified information with an instruction for designation given, and, when the first operation state is terminated without detection of the second operation state after the first operation state is detected, terminate designation of the specified information with an instruction for designation given.

### (Supplementary Note 14)

An information processing device comprising:
a display input part accepting an operation of an operation object;
an operation detecting means for accepting an input operation of the operation object by detecting an operation position and an operation pressure of the operation object on a face of the display input part; and
a controlling means for executing a preset process in accordance with the input operation, wherein:
the operation detecting means is configured to, based on a level of the operation pressure of the accepted input operation, detect either a first operation state or a second operation state in a same operation position on the face of the display input part; and
the controlling means is configured to, when the operation detecting means detects the first operation state, give an instruction for confirmation of specified information selected by the input operation, and, when the operation detecting means detects the second operation state where the face of the display input part is pressured more than in the first operation state, cancel a process of confirmation of the specified information with an instruction for confirmation given.

The present invention is based upon and claims the benefit of priority from Japanese patent application No. 2012-152401, filed on July 6, 2012, the disclosure of which is incorporated herein in its entirety by reference.

### DESCRIPTION OF REFERENCE NUMERALS

- 1: information processing device
- 21: control part
- 23: display input part
- 25: pressing switch part
- 26: operation detecting part
- 31: display part
- 32: touchscreen
- 201: information processing device
- 225: operation detecting part
- 231: touchscreen

## Claims

1. An information processing device comprising:
a display input part accepting an operation of an operation object;
an operation detecting means for accepting an input operation of the operation object by detecting an operation position of the operation object on a face of the display input part; and
a controlling means for executing a preset process in accordance with the input operation, wherein:
the operation detecting means is configured to, based on the accepted input operation, detect either a first operation state or a second operation state in a same operation position on the face of the display input part; and
the controlling means is configured to, when the operation detecting means detects the first operation state, give an instruction for designation of specified information selected by the input operation, and, when the operation detecting means detects the second operation state, give an instruction for confirmation of the specified information.

2. The information processing device according to Claim 1, wherein:
the controlling means is configured to, when the operation detecting means detects the second operation state after detecting the first operation state, give an instruction for confirmation of the specified information with an instruction for designation given; and
the controlling means is configured to, when the first operation state is terminated without detection of the second operation state after the first operation state is detected by the operation detecting means, terminate designation of the specified information with an instruction for designation given.

3. The information processing device according to Claim 1 or 2, wherein the controlling means is configured to, when the second operation state is detected after the first operation state is detected, display associated information previously associated with the specified information, around a display position of the specified information.

4. The information processing device according to Claim 3, wherein the controlling means is configured to, when the second operation state is terminated after the second operation state is detected, execute a process which is previously related to the specified information or the associated information selected immediately before the second operation state is terminated.

5. The information processing device according to any of Claims 1 to 4, wherein the controlling means is configured to, when the operation detecting means detects the first operation state, display designated information previously related to the specified information, around a display position of the specified information.

6. The information processing device according to Claim 5, wherein the controlling means is configured to, when the first operation state is terminated without detection of the second operation state after the first operation state is detected by the operation detecting means, delete display of the designated information.

7. The information processing device according to any of Claims 1 to 6, wherein the operation detecting means is configured to detect a contact state as the first operation state and detect a pressure state as the second state, the contact state being a state in which the operation object is in contact with the face of the display input part, and the pressure state being a state in which, in the contact state, the operation object pressures the contact face at a predetermined pressure.

8. The information processing device according to any of Claims 1 to 6, wherein the operation detecting means is configured to detect a contact state as the first operation state and detect a press state as the second state, the contact state being a state in which the operation object is in contact with the face of the display input part, and the press state being a state in which, in the contact state, the operation object presses the contact face more.

9. The information processing device according to any of Claims 1 to 6, wherein the operation detecting means is configured to detect a proximity state as the first operation state and detect a contact state as the second operation state, the proximity state being a state in which it is possible to detect that the operation object is not in contact with the face of the display input part and is located over the face of the display input part, and the contact state being a state in which the operation object is in contact with the face of the display input part.

10. An information processing method by an information processing device including a display input part accepting an operation of an operation object, the information processing method comprising:
accepting an input operation of the operation object by detecting an operation position of the operation object on a face of the display input part, and, based on the accepted input operation, detecting either a first operation state or a second operation state in a same operation position on the face of the display input part; and
when the first operation state is detected, giving an instruction for designation of specified information selected by the input operation, and, when the second operation state is detected, giving an instruction for confirmation of the specified information.

11. The information processing method according to Claim 10, comprising:
when the second operation state is detected after the first operation state is detected, giving an instruction for confirmation of the specified information with an instruction for designation given, and, when the first operation state is terminated without detection of the second operation state after the first operation state is detected, terminating designation of the specified information with an instruction for designation given.

12. A computer program comprising instructions for causing an information processing device including a display input part accepting an operation of an operation object, to realize:
an operation detecting means for accepting an input operation of the operation object by detecting an operation position of the operation object on a face of the display input part; and
a controlling means for executing a preset process in accordance with the input operation,
the computer program comprising instructions for causing the information processing device to realize that:
the operation detecting means is configured to, based on the accepted input operation, detect either a first operation state or a second operation state in a same operation position on the face of the display input part; and
the controlling means is configured to, when the operation detecting means detects the first operation state, give an instruction for designation of specified information selected by the input operation, and, when the operation detecting means detects the second operation state, give an instruction for confirmation of the specified information.

13. The computer program according to Claim 12, wherein the controlling means is configured to, when the second operation state is detected after the first operation state is detected, give an instruction for confirmation of the specified information with an instruction for designation given, and, when the first operation state is terminated without detection of the second operation state after the first operation state is detected, terminate designation of the specified information with an instruction for designation given.
